# FASCICULE DE BREVET EUROPEEN

(11) **EP 0 927 845 B1**
(45) Date de publication et mention de la délivrance du brevet: **06.08.2003**
(21) Numéro de dépôt: 98403320.9
(22) Date de dépôt: 29.12.1998
(51) Int. Cl.: F16K 3/24, F15B 20/00

(54) **Vanne de régulation redondée**
Redundantes Regelventil
Redundant regulation valve

(30) Priorité: 29.12.1997 FR 9716616
(43) Date de publication de la demande: 07.07.1999
(73) Titulaire: SOCIETE NATIONALE D'ETUDE ET DE CONSTRUCTION DE MOTEURS D'AVIATION, "S.N.E.C.M.A.", 75015 Paris (FR)
(72) Inventeur: Fournier, Jean-Pierre, 27630 Ecos (FR); Meyer, Francis, 27940 Venables (FR); Languedoc, Christian, 27940 Port-Mort (FR); Salze, David, 49420 Pouange (FR)
(74) Mandataire: Thévenet, Jean-Bruno

(56) Documents cités:
- FR-A- 2 675 230
- US-A- 4 498 471
- US-A- 4 568 061
- US-A- 5 095 939
- US-A- 5 247 964

## Description

### Domaine de l'invention.

La présente invention concerne une vanne de régulation redondée, pour contrôler le passage d'un fluide, comprenant un corps de vanne définissant un passage pour l'écoulement du fluide, et un élément principal de laminage mobile à l'aide d'un dispositif de commande principal pour obturer sélectivement ledit passage.

### Art antérieur

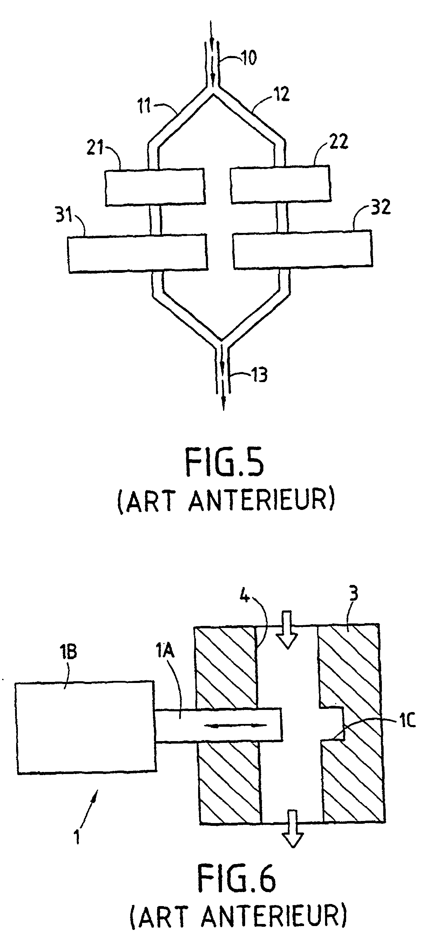

On a représenté sur la figure 5 le schéma d'une installation hydraulique présentant une redondance complète pour la commande de l'écoulement sélectif d'un fluide dans un circuit comprenant des conduites principales 10, 13. Dans ce système redondé, on interpose entre les conduites principales 10, 13 deux conduites en parallèle 11, 12 sur chacune desquelles est interposé le montage série d'une vanne d'arrêt 21 respectivement 22 et d'une vanne de régulation 31 respectivement 32.

Le montage illustré schématiquement sur la figure 5 offre bien une redondance totale par la duplication complète de tous les équipements (vanne d'arrêt et vanne de régulation), mais présente des inconvénients majeurs, dans la mesure où ce système est encombrant avec des éléments conduisant à une masse importante, ce qui le rend prohibitif notamment dans les applications spatiales.

Le montage totalement redondant présente par ailleurs un coût élevé et peut être délicat à mettre en oeuvre avec des phases transitoires délicates au sein d'un système régulé.

On a encore proposé, comme représenté schématiquement sur la figure 6, d'utiliser une vanne de régulation avec un corps de vanne 3 définissant un passage 4 l'écoulement d'un fluide pouvant être obturé par un système d'obturation sélective comprenant un barreau de laminage 1A pouvant se déplacer linéairement dans le passage 4 pour venir en butée dans une gorge fixe 1C du corps de vanne 3 sous l'action d'un dispositif de commande 1B. Afin d'accroître la sécurité sans augmenter sensiblement la masse ni le coût, le dispositif de commande 1B est redondé, c'est-à-dire comporte en double les organes de commande de façon qu'un élément de substitution puisse entrer en action en cas de défaillance d'un élément initial du dispositif de commande 1B.

Une telle redondance des seuls organes de commande permet une mise en oeuvre aisée et rend l'ensemble plus fiable, mais n'offre pas de solution au cas où l'élément de laminage 1A s'avère lui-même défaillant, par exemple à cause d'un grippage. Or une telle défaillance peut avoir des conséquences catastrophiques dans un certain nombre d'applications.

Une Vanne conforme au préambule de la revendication 1 est connue du document US-A-5 247 964.

### Objet et description succincte de l'invention.

L'invention vise à remédier aux inconvénients précités et à permettre d'accroître la sécurité de fonctionnement d'une vanne de régulation de fluide sans accroître sensiblement la complexité ou l'encombrement du système et en conservant pour l'ensemble de l'équipement une masse réduite et des coûts de fabrication, de montage et de fonctionnement raisonnables.

Ces buts sont atteints grâce à une vanne de régulation redondée, pour contrôler le passage d'un fluide, comprenant un corps de vanne définissant un passage pour l'écoulement du fluide, un élément principal de laminage mobile à l'aide d'un dispositif de commande principal pour obturer sélectivement ledit passage, ainsi qu'un élément redondant de laminage mobile à l'aide d'un dispositif de commande redondant, caractérisée en ce que, en position fermée de la vanne, en fonctionnement, normal, l'élément principal et l'élément redondant sont en contact l'un avec l'autre et, à eux deux, obturent complétement ledit passage en ce que dans cette position fermée normale l'élément principal est au voisinage de sa position de déplacement maximale dans le sens de la fermeture et n'obture qu'environ la moitié du passage tandis que l'élément redondant est dans une position de déplacement moyenne et en ce que la course de l'élément redondant est telle que cet élément redondant peut être commandé pour assurer l'obturation du passage même lorsque l'élément principal est en position d'ouverture maximale.

De façon plus particulière, l'élément principal de laminage ou le dispositif de commande principal est associé à un dispositif de butée agissant en position d'ouverture maximale et en position de fermeture normale de la vanne, et l'élément redondant de laminage ou le dispositif de commande redondant est associé à un dispositif de butée agissant en position d'ouverture maximale de l'élément principal de laminage et en position de fermeture de secours par l'élément redondant de laminage.

Selon un mode particulier de réalisation, le dispositif de commande principal comprend un moteur électrique et un ensemble vis-écrou entraînant l'élément principal de laminage.

De la même manière, le dispositif de commande redondant peut comprendre un moteur électrique et un ensemble vis-écrou, entraînant l'élément redondant de laminage.

Selon un aspect de l'invention, le dispositif de commande principal est associé à une boucle de régulation comportant :
a) des moyens pour provoquer l'ouverture de l'élément principal selon un premier profil commandé jusqu'à une ouverture nominale,
b) des moyens pour, lorsque cette ouverture nominale est atteinte, asservir la position de l'élément principal à un paramètre prédéfini associé à un organe alimenté par l'écoulement de fluide traversant la vanne,
c) des moyens pour provoquer la fermeture de l'élément principal selon un deuxième profil commandé qui assure un freinage en fin de course de l'élément principal arrivant en butée contre l'élément redondant.
   De façon plus particulière, la boucle de régulation associée au dispositif de commande principal et au dispositif de commande redondant comprend en outre :
d) des moyens pour détecter un non respect de l'ouverture de l'élément principal selon ledit premier profil commandé,
e) des moyens pour commander le déplacement de l'élément redondant en cas de non respect dudit premier profil commandé lors de l'ouverture de l'élément principal,
f) des moyens pour détecter un non respect de l'asservissement de l'élément principal audit paramètre prédéfini,
g) des moyens pour asservir le déplacement de l'élément redondant en cas de non respect dudit asservissement de l'élément principal,
h) des moyens pour détecter un non respect de la fermeture de l'élément principal selon ledit deuxième profil commandé et
i) des moyens pour provoquer le déplacement de l'élément redondant en cas de non respect dudit deuxième profil commandé lors de la fermeture de l'élément principal.

Selon un premier mode de réalisation l'élément principal de laminage et l'élément redondant de laminage sont constitués respectivement par un barreau principal de laminage et par un barreau redondant de laminage alignés axialement et axialement mobiles en translation respectivement à l'aide du dispositif de commande principal et à l'aide du dispositif de commande redondant.

Selon un mode particulier de réalisation, le barreau principal et le barreau redondant alignés axialement sont en contact, en position de fermeture normale, par des surfaces frontales planes annulaires.

Selon un autre mode particulier de réalisation, le barreau principal et le barreau redondant alignés axialement sont en contact, en position de fermeture normale, par des surfaces de révolution coniques ou ogivales.

Selon encore un autre mode particulier de réalisation, le barreau principal et le barreau redondant sont coaxiaux et partiellement emboîtés l'un dans l'autre.

Dans ce cas, avantageusement, le barreau principal comporte des canaux internes assurant le passage de l'écoulement et débouchant radialement par des ouvertures à travers la paroi cylindrique de ce barreau principal, des joints sont interposés entre les surfaces cylindriques coaxiale du barreau principal et du barreau redondant et au moins l'une des ouvertures radiales du barreau principal est sélectivement obturable par la paroi cylindrique du barreau redondant dans lequel le barreau principal est emboîté.

Selon un autre mode de réalisation, l'élément principal de laminage et l'élément redondant de laminage sont constitués respectivement par un barreau principal de laminage et par un barreau redondant de laminage alignés axialement et munis de volets de laminage mobiles en rotation respectivement à l'aide du dispositif de commande principal et à l'aide du dispositif de commande redondant.

Selon une caractéristique particulière, la vanne comprend des dispositifs d'amortissement de choc disposés au niveau des interfaces d'une part entre le dispositif de commande principal et l'élément principal de laminage et d'autre part entre le dispositif de commande redondant et l'élément redondant de laminage.

### Brève description des dessins.

D'autres caractéristiques et avantages de l'invention ressortiront de la description suivante de modes particuliers de réalisation donnés à titre d'exemples, en référence aux dessins annexés, sur lesquels :
- les figures 1 à 4 sont des vues schématiques montrant le principe de fonctionnement d'une vanne de régulation redondée conforme à la présente invention avec respectivement une vue de la vanne en position fermée normale, une vue de la vanne en position ouverte normale, et deux vues de la vanne en position fermée dans deux cas de panne de l'élément principal normal de fermeture de la vanne, les éléments de laminage étant mobiles axialement en translation,
- la figure 5 est une vue schématique d'un système connu présentant une redondance complète avec quatre vannes réparties en deux circuits parallèles comportant chacun deux vannes en série,
- la figure 6 est une vue schématique d'une vanne de régulation connue comportant une commande redondée,
- les figures 7 à 9 sont des vues en coupe axiale de trois variantes d'une vanne de régulation redondée conforme à un premier mode de réalisation de l'invention à deux barreaux de laminage alignés axialement et mobiles en translation,
- la figure 10 est une vue en coupe axiale d'une vanne de régulation redondée selon un deuxième mode de réalisation de l'invention à deux barreaux de laminage coaxiaux partiellement imbriqués l'un dans l'autre et mobiles axialement,
- la figure 11 est une vue schématique en coupe, dans un plan perpendiculaire à l'écoulement du fluide, montrant un exemple de vanne de régulation redondée conforme à l'invention, dans laquelle les éléments de laminage de l'écoulement sont mobiles en rotation,
- la figure 12 est une section selon le plan XII-XII de la figure 11 et montre une vue de la vanne en position fermée normale,
- la figure 13 est une section analogue à celle de la figure 12, mais montre la vanne en position d'ouverture maximale de l'élément de laminage principal,
- la figure 14 est une section analogue à celle de la figure 12, mais correspond à un cas de panne de l'élément de laminage principal et de fermeture par l'élément de laminage redondant,
- la figure 15 est une section analogue à celle de la figure 12, mais correspond à un cas de panne de l'élément de laminage principal et d'ouverture par l'élément de laminage redondant,
- la figure 16 est une vue en coupe axiale d'une vanne de régulation redondée selon un mode particulier de réalisation de l'invention avec deux barreaux de laminage rotatifs alignés axialement, et
- la figure 17 est un organigramme montrant la mise en oeuvre de moyens de commande des deux barreaux de laminage d'une vanne de régulation selon l'invention.

### Description détaillée de modes particuliers de réalisation

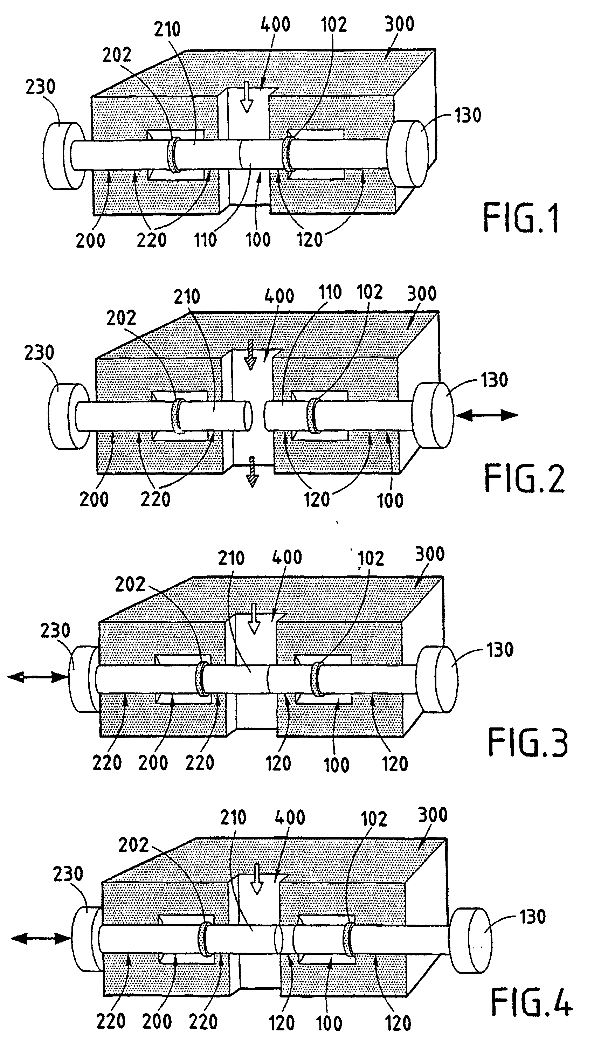

On se réfèrera d'abord aux figures 1 à 4 à l'aide desquelles seront explicitées la nature et la fonction d'une vanne de régulation selon l'invention, dans un mode de réalisation du type à translation.

Une vanne de régulation selon l'invention comprend un corps de vanne 300 définissant un passage 400 d'écoulement de fluide sélectivement obturable à l'aide d'un ensemble principal d'obturation 100 et d'un ensemble redondant d'obturation 200.

L'ensemble principal d'obturation 100 comprend un barreau principal de laminage 110, des moyens 120 de guidage du barreau principal 110, une butée 102 et un organe 130 de commande du barreau principal 110.

L'ensemble redondant d'obturation 200 comprend un barreau redondant de laminage 210, des moyens 220 de guidage du barreau redondant 210, une butée 202 et un organe 230 de commande du barreau redondant 210.

L'ensemble principal d'obturation 100 et l'ensemble redondant d'obturation 200 peuvent avoir des configurations assez semblables. Toutefois, l'agencement de chacun de ces ensembles 100, 200 par rapport au corps de vanne 300 est différent.

Comme on peut le voir sur les figures 1 à 4, le barreau principal de laminage 110 et le barreau redondant de laminage 210 sont alignés axialement et peuvent être déplacés axialement respectivement à l'aide des dispositifs de commande 130 et 230.

En fonctionnement normal, lorsque la vanne est en position fermée (fig. 1), le barreau principal 110 et le barreau redondant 210 sont en contact l'un avec l'autre. Dans cette position fermée normale, pour laquelle l'écoulement dans le passage 400 est interrompu par les barreaux 110, 210, le barreau principal 110 est au voisinage de sa position de déplacement maximale dans le sens de la fermeture (butée 102 placée dans sa position extrême à gauche), tandis que le barreau redondant 210 est dans une position de déplacement moyenne (butée 202 située en position moyenne).

Lors de l'ouverture de la vanne, le barreau principal 110 est normalement déplacé vers la droite de la fig. 2 pour permettre l'écoulement de fluide dans le passage 400. Le barreau principal 110 est actionné par le dispositif de commande principal 130, qui permet des déplacements linéaires du barreau principal 110 dans les deux sens, ce qui autorise une régulation de l'écoulement de fluide dans le passage 400. Dans les conditions normales de fonctionnement, le barreau redondant 210 reste dans la même position que sur la fig. 1 et ne participe pas à la modulation du flux de fluide circulant dans le passage 400. Le barreau redondant 210 n'est sollicité par le dispositif de commande redondant 230 pour participer à la régulation du flux de fluide dans le passage 400 qu'en cas de défaillance du barreau principal 110 ou du dispositif de commande principal 130.

Les figures 3 et 4 montrent le cas d'une panne du barreau principal de laminage 110 ou de son dispositif de commande 130. Dans le cas de la fig. 3, le barreau principal 110 est engagé partiellement dans le passage 400 mais par suite d'une défaillance, ne peut être déplacé plus loin vers la gauche pour refermer la vanne. C'est alors le barreau redondant 210 qui est actionné par le dispositif de commande 230 pour venir en butée contre le barreau principal 110 et assurer ainsi la refermeture de la vanne.

Dans le cas de la fig. 4, le barreau principal 110 est rétracté en position extrême d'ouverture maximale de la vanne de telle manière qu'il n'obture même pas partiellement le passage 400. La butée 102 est alors placée en position extrême à droite sur la figure 4; le barreau redondant 210 est lui même actionné par le dispositif de commande redondant 230 de manière à venir obturer complètement à lui seul le passage 400. La butée 202 est alors en position extrême à droite sur la fig. 4.

Il ressort du fonctionnement explicité en référence aux fig. 1 à 4 que la course du barreau redondant 210 est telle que ce barreau redondant 210 peut être commandé pour assurer l'obturation du passage 400 même lorsque le barreau principal 110 est en position d'ouverture maximale.

A l'inverse, si le barreau principal 110 est bloqué dans sa position de fermeture normale de la figure 1, dans laquelle il obture sensiblement la moitié de la section du passage 400, et si, par suite d'une panne, ce barreau principal 110 ne peut pas se rétracter pour assurer une ouverture comme sur la figure 2, le barreau redondant 210 peut lui-même être rétracté vers la gauche (puisque la butée 202 n'est elle-même qu'à mi-course) pour assurer une ouverture du passage 400, avec une possibilité de régulation de la section de cette ouverture grâce au circuit de commande redondant 230.

Ainsi, du fait même que lorsque la vanne est fermée (figure 1), l'étanchéité est réalisée entre deux éléments de laminage mobiles 110, 210 positionnés de façon bien définie, la vanne présente une redondance à la fois à l'ouverture, à la fermeture et pendant l'asservissement.

Le canal 400 peut présenter des sections de diverses formes, mais présente avantageusement une section rectangulaire. L'élément de laminage principal 110 n'est capable d'occulter que la moitié du canal hydraulique 400 (figure 1). En revanche, l'élément de laminage redondant 210 est prévu pour pouvoir assurer une occultation totale du canal hydraulique 400 (figure 4). Des moyens d'étanchéité (non représentés sur les figures 1 à 4) sont associés aux éléments de laminage principal 110 et redondant 210.

Les dispositifs de butées 102, 202 peuvent être solidaires des dispositifs de commande principal et redondant 130, 230 ou de la partie hydraulique de la vanne constituée par les éléments de laminage principal et redondant 110, 210.

La butée 102 est active dans la position de fermeture de la vanne (figure 1, positionnement à gauche), ainsi que dans une position d'ouverture totale de la vanne (positionnement à droite comme sur la figure 4 qui correspond à un élément principal de laminage 110 maintenu bloqué à pleine ouverture).

La butée 202 est active dans la position de fermeture de la vanne par l'élément de laminage redondant 210 (figure 4, positionnement à droite). Si l'élément de laminage principal 110 est maintenu bloqué en position fermée (figure 1), et si l'ouverture de la vanne est commandée par le dispositif de commande redondant 230, la butée 202 peut aussi venir dans une position extrême à gauche correspondant à une pleine ouverture de la vanne par l'élément de laminage redondant 210.

Les dispositifs de commande 130, 230 sont avantageusement de type électrique.

Dans le cas d'un fonctionnement normal de la vanne par l'élément de laminage principal 110, l'élément de laminage redondant 210 est maintenu bloqué, par un frein, ou du fait de l'irréversibilité de la commande, par exemple si le dispositif de commande redondant inclut une commande par motoréducteur à rapport important ou par moteur piézoélectrique.

Dans le cas d'un fonctionnement de la vanne grâce à l'élément de laminage redondant 210, il est de même avantageux de garantir le maintien en position de l'élément de laminage principal 110 par un dispositif de commande principal 130 du même type que celui du dispositif de commande redondant 230.

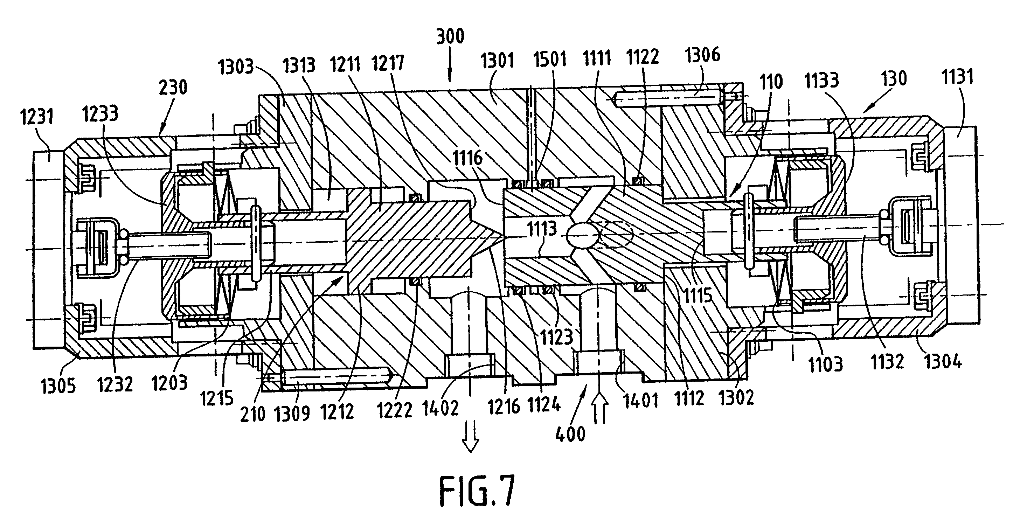

On décrira maintenant en référence aux fig. 7 à 9 un premier mode de réalisation d'une vanne de régulation selon l'invention. Les fig. 7 à 9 montrent trois variantes de réalisation présentant des configurations différentes des surfaces de contact entre les extrémités du barreau principal 110 et du barreau redondant 210. Hormis ces géométries différentes des surfaces de contact, le reste des éléments constitutifs de la vanne sont identiques dans les trois variantes de réalisation et portent les mêmes références. Ce premier mode de réalisation sera d'abord décrit de façon plus particulière en référence à la fig. 7, qui concerne une vanne à barreaux de laminage mobiles en translation.

Le corps de vanne 300 de la fig. 7 comprend une partie centrale 1301 et deux parties latérales 1302, 1303 rapportées contre la partie centrale 1301 et fixées à celle-ci par des éléments de liaison 1306, 1309. La partie centrale 1301 du corps de vanne 300 définit un passage 400 pour l'écoulement d'un fluide avec un orifice d'entrée 1401, un orifice de sortie 1402 et des cavités 1403, 1404 pouvant être sélectivement obturées par un barreau principal 110 et un barreau redondant 210. Dans l'exemple de la fig. 7, le barreau principal 110 comprend un corps principal 1111 cylindrique percé de canaux 1113 et prolongé à sa partie arrière (à droite sur la fig. 7) par une partie 1115 de section réduite, en prise avec le dispositif de commande 130. Le corps principal 1111 cylindrique sert de moyen de guidage 120 pour le barreau principal 110, par rapport à un alésage formé dans la partie centrale 1301 du corps de vanne. Des joints 1122, 1123, 1124 sont interposés entre la surface cylindrique extérieure du corps principal 1111 et l'alésage correspondant de la partie centrale 1301.

Le dispositif de commande principal 130 comprend un moteur électrique 1131, par exemple du type moteur couple sans balais, dont le corps est relié à la partie latérale 1302 du corps de vanne par un carter 1304. L'arbre de sortie du moteur électrique 1131 commande un ensemble vis 1132-écrou 1133 relié à la partie arrière 1115 du barreau principal 110 pour provoquer les déplacements linéaires de translation axiaux de celui-ci dans un sens ou dans l'autre. Le moteur 1131 est lui-même commandé à partir d'un système de régulation auquel sont appliqués des signaux issus d'un capteur 1501 de position du barreau principal 110.

Dans l'exemple de la fig. 7, le barreau redondant 210 comprend un corps principal 1211 essentiellement cylindrique qui peut coulisser par rapport à un alésage cylindrique de la partie centrale 1301 du corps de vanne. Un joint 1222 est interposé entre le corps principal 1211 et l'alésage cylindrique correspondant de la partie centrale 1301. Une partie cylindrique de section accrue 1212 du barreau redondant 210 peut servir de guidage et de butée à l'intérieur d'une cavité cylindrique 1313 ménagée dans la partie centrale 1301 du corps de vanne. Le barreau redondant 210 est prolongé sur sa partie arrière (à gauche sur la fig. 7) par une partie 1215 de section réduite, en prise avec le dispositif de commande redondant 230, qui comprend un moteur électrique 1231, par exemple du type moteur couple sans balais, dont le corps est relié à la partie latérale 1303 du corps de vanne par un carter 1305. L'arbre de sortie du moteur électrique 1231 commande un ensemble vis 1232-écrou 1233 relié à la partie arrière 1215 du barreau redondant 210 pour provoquer les déplacements linéaires de translation axiaux de celui-ci, dans un sens ou dans l'autre, en cas de défaillance du barreau principal 110 ou de son système de commande. Des dispositifs d'amortissement de choc 1103, 1203 sont disposés au niveau des interfaces d'une part entre le dispositif de commande principal 130 et la partie arrière 1115 du barreau principal 110 et d'autre part entre le dispositif de commande redondant 230 et la partie arrière 1215 du barreau redondant 210.

La partie avant du barreau redondant 210 présente, dans l'ensemble de la fig. 7, une partie centrale conique 1216 qui peut pénétrer à l'intérieur d'un canal axial 1113 du corps principal 1111 du barreau principal 110, et une partie frontale périphérique annulaire plane 1217 qui peut venir en contact avec une partie frontale périphérique annulaire plane 1116 du barreau principal 110, lorsque la vanne est en position fermée, dans une situation analogue à celle des fig. 1 et 3 où il y a la mise en contact des parties terminales frontales du barreau principal 110 et du barreau redondant 210. La figure 7 correspond elle-même à une position d'ouverture de la vanne, analogue à celle de la figure 2. Les références 1112 et 1212 représentent des exemples de butée des barreaux principaux et redondants 110, 210.

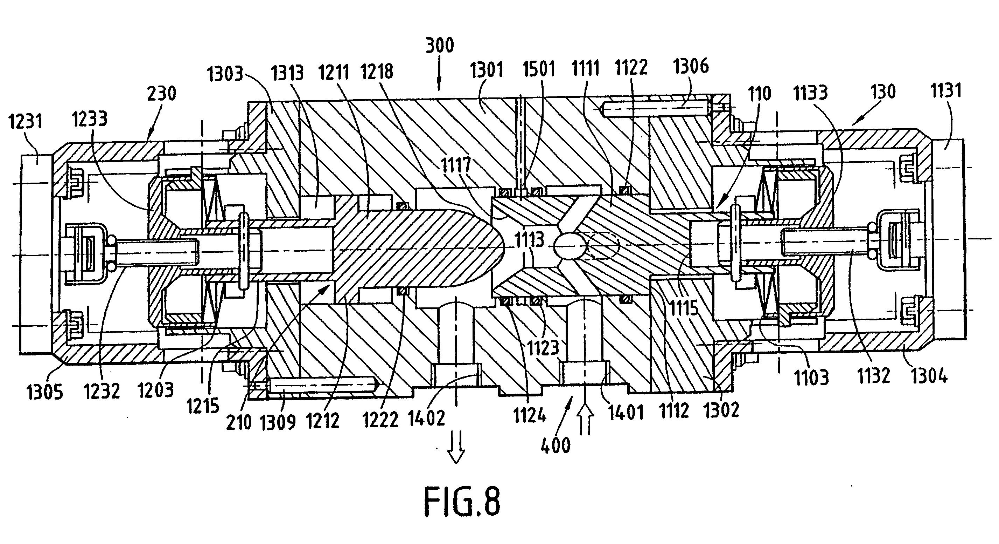

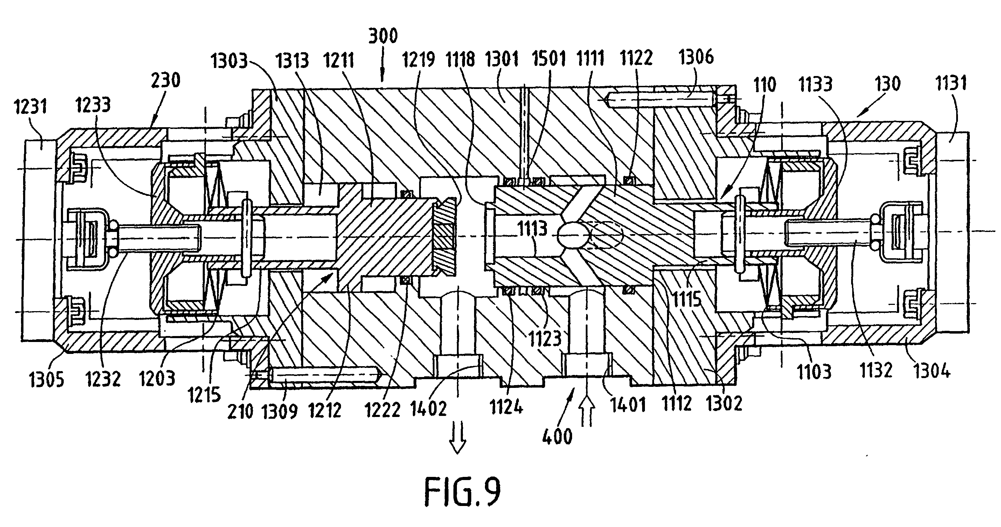

Les figures 8 et 9 correspondent à des variantes du mode de réalisation de la figure 7, qui sont également représentées en position ouverte de la vanne. Les éléments identiques dans les variantes des figures 7, 8 et 9 portent les mêmes références et ne seront pas décrits à nouveau.

Dans la variante de la figure 8, la surface 1117 de la partie terminale du corps principal 1111 du barreau principal 110 est conique tandis que la partie avant 1218 du corps principal 1211 du barreau redondant 210 et de forme ogivale pour venir en contact sur une zone annulaire avec la surface conique 1117 lorsque la vanne est en position fermée. La figure 8 correspond elle-même à une position d'ouverture de la vanne, analogue à celle de la figure 2.

Dans la variante de la figure 9, la surface 1118 de la partie terminale du corps principal 1111 du barreau principal 110 présente la forme d'une surface plane annulaire formée sur un collet du corps principal 1111 et destinée à coopérer avec une face plane frontale 1219 du corps principal 1211 du barreau redondant 210, lorsque la vanne est en position fermée. La figure 9 correspond elle-même à une position d'ouverture de la vanne, analogue à celle de la figure 2.

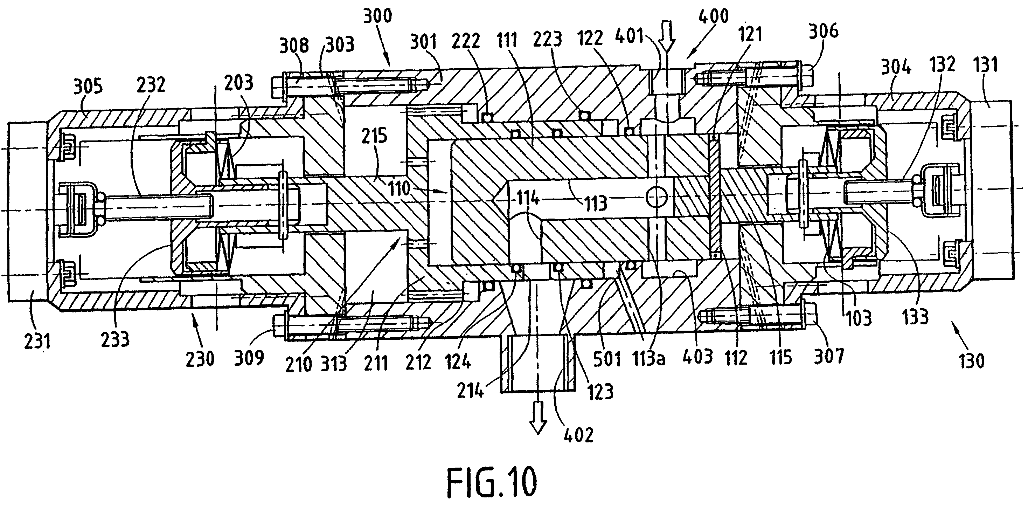

La figure 10 montre un deuxième mode de réalisation de l'invention. Sur la figure 10, les éléments analogues à ceux du mode de réalisation des figures 7 à 9 portent des références correspondant aux trois derniers chiffres des éléments correspondants déjà décrits en référence aux figures 7 à 9. Les éléments 301 à 303 du corps de vanne 300, reliés entre eux par des moyens de liaison 306 à 309, le dispositif de commande principal 130 et le dispositif de commande redondant 230, qui présentent des caractéristiques semblables sur les figures 7 à 10, ne seront pas décrits à nouveau en détail.

Le mode de réalisation de la figure 10 se distingue en particulier par le fait que le barreau principal 110 et le barreau redondant 210 sont coaxiaux et partiellement emboîtés l'un dans l'autre.

De façon plus particulière, le barreau principal 110 comporte un corps principal 111 avec un canal interne axial 113 assurant le passage de l'écoulement et débouchant radialement par des ouvertures 113a, 114 à travers la paroi cylindrique de ce barreau principal 110, pour permettre, en position ouverte de la vanne, un passage du fluide de l'orifice d'entrée 401 du corps de vanne vers la canal interne 113 et du canal interne 113 vers l'orifice de sortie 402 à travers un orifice 214 formé dans la paroi cylindrique du corps 211 du barreau redondant 210 dans lequel est emboîté le barreau principal 110. La position du barreau principal 110 et celle du barreau redondant 210 sont ajustées de telle manière que les ouvertures radiales 114, 214 des barreaux 110, 210 ne se superposent pas, dans la position de fermeture de la vanne correspondant au cas des situations des figures 1, 3 et 4, ou se chevauchent, dans la position d'ouverture représentée sur la figure 10 et correspondant à la situation de la figure 2.

Sur la figure 10, la référence 501 désigne un capteur de position du barreau principal 110. Ce capteur 501 est placé en regard du corps principal 111 du barreau principal 110, mais pourrait aussi être disposé en regard de la partie arrière 115 de ce barreau principal 110.

En fonctionnement, le barreau principal 110 pénètre dans l'alésage 314 du barreau redondant 210 et le barreau redondant 210 peut lui-même se déplacer selon une course limitée, mais pouvant être de l'ordre du double de celle du barreau principal 110, à l'intérieur d'un alésage 313 formé dans le corps de vanne 300.

Dans le système vis 232-écrou 233 du dispositif de commande redondant 230, la vis 232 présente une longueur de l'ordre du double de celle de la vis 132 du système vis 132-écrou 133 du dispositif de commande principal 130.

Une vanne de régulation selon l'invention est particulièrement adaptée pour être utilisée dans le domaine spatial, par exemple pour être interposée sur une ligne d'alimentation en ergol d'un générateur de gaz destiné à alimenter des turbopompes d'alimentation en ergols d'un moteur-fusée.

La mise en oeuvre de dispositifs de commande 130, 230 utilisant des systèmes vis-écrou assure un blocage des barreaux de laminage 110, 210 dans les positions définies par les circuits de régulation, même en présence d'une ambiance vibratoire et sous forte pression.

Une vanne selon l'invention est avantageusement asservie en position dans une boucle de régulation prenant en compte un paramètre prédéfini associé au fonctionnement d'un organe alimenté par l'écoulement du fluide traversant la vanne.

Dans le cas de l'application à une vanne d'alimentation d'un générateur de gaz associé à un moteur-fusée, la boucle de régulation permet de commander la puissance du générateur des gaz utilisés pour le fonctionnement de turbopompes d'alimentation en ergols d'un moteur-fusée, et par suite permet de commander la puissance du moteur-fusée en ajustant la position de l'élément de laminage de la vanne.

Le processus de commande d'une vanne selon l'invention intégrée dans une boucle de régulation telle que celle définie ci-dessus en référence au fonctionnement d'un générateur de gaz associé à un moteur-fusée est le suivant :

Au départ, les deux éléments de laminage (noyaux plongeurs ou barreaux principal 110 et redondant 210) sont en contact sur l'axe de passage du fluide (figure 1). Lorsque le générateur de gaz doit être allumé, on ouvre selon un profil commandé la vanne en agissant sur le dispositif de commande 130 du barreau principal 110 (figure 2). Lorsque le barreau principal 110 atteint la position correspondant à l'ouverture nominale, le déplacement du barreau principal 110 devient asservi à un paramètre du moteur-fusée. En fin de fonctionnement du moteur-fusée, celui-ci est éteint en agissant sur la vanne à l'aide du dispositif de commande principal 130 qui commande le déplacement du barreau principal 110 selon un profil commandé qui prend en compte le freinage ou l'amortissement en fin de course pour éviter un choc sur le barreau redondant 210 formant butée.

Le dispositif de commande redondant 230 intervient en cas de panne du dispositif de commande principal 130 ou du barreau principal 110, par exemple à l'ouverture de la vanne, si le dispositif d'ouverture n'est pas respecté, ou en cours de régulation, si la détection des déplacements du barreau principal 110 révèle que le barreau principal 110 ne suit pas les ordres reçus, ou encore à la fermeture, si le barreau principal 110 se trouve coincé dans une position escamotée.

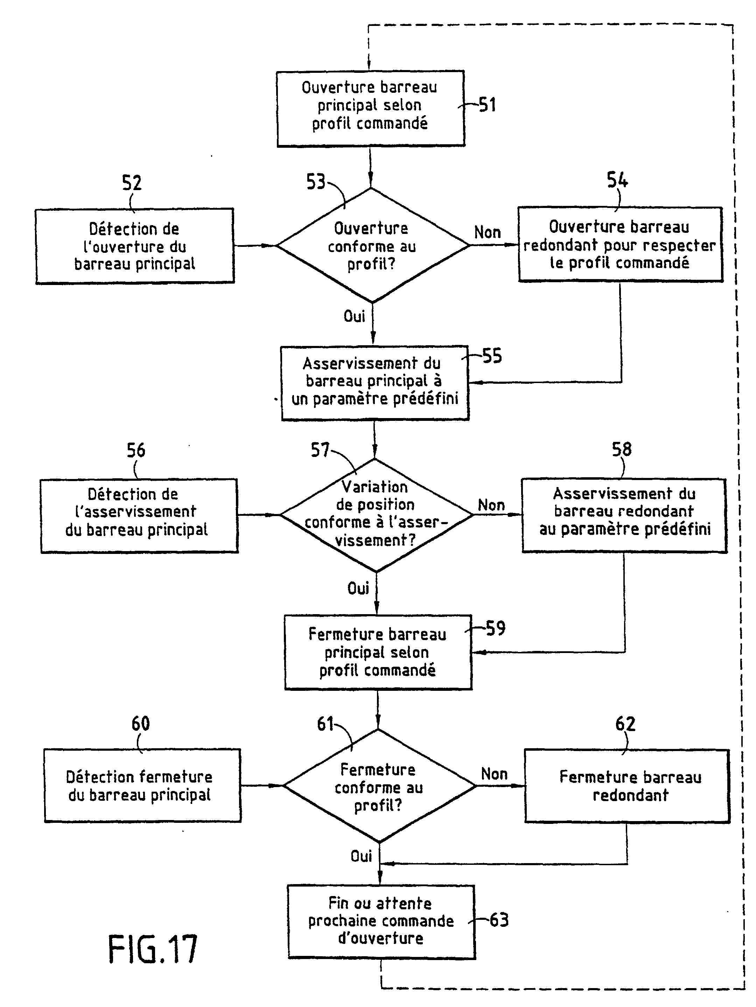

La figure 17 résume les principales étapes de fonctionnement d'une boucle de régulation commandant le dispositif de commande principal 130 et le dispositif de commande redondant 230.

Dans une première étape 51, le dispositif de commande principal 130 commande l'ouverture de la vanne par déplacement du barreau principal 110 selon un profil commandé. Parallèlement, dans une étape 52, un détecteur de position du barreau principal 110 envoie une information à la boucle de régulation qui effectue un test selon une étape 53. S'il est constaté que l'ouverture de la vanne ne s'effectue pas selon le profil commandé, il y a passage à une étape 54 de commande, par le dispositif de commande redondant 230, du déplacement du barreau redondant 210 pour assurer l'ouverture de la vanne selon le profil commandé.

L'étape suivante 55 consiste en l'asservissement de la position du barreau principal 110 à un paramètre prédéfini (tel qu'un paramètre lié au fonctionnement d'un générateur de gaz dont la vanne assure l'alimentation).

Parallèlement, à l'étape 56, un détecteur de position du barreau principal 110 envoie une information à la boucle de régulation qui effectue un test selon une étape 57. S'il est constaté que les variations de position du barreau principal 110 ne sont pas conformes aux commandes d'asservissement, il y a passage à une étape 58 d'asservissement, par le dispositif de commande redondant 230, de la position du barreau redondant 210 de manière à assurer l'ouverture asservie de la vanne selon les variations du paramètre prédéfini.

L'étape suivante 59 consiste en la commande, par le dispositif de commande principal 130, de la fermeture de la vanne par déplacement du barreau principal 110 selon un profil commandé.

Parallèlement, à l'étape 60, un détecteur de position du barreau principal 110 envoie une information à la boucle de régulation qui effectue un test selon une étape 61. S'il est constaté que la fermeture de la vanne s'opère de façon conforme au profil commandé, il est procédé au passage à l'étape 63 qui constitue la fin du processus ou une étape d'attente d'une prochaine commande d'ouverture avec répétition des différentes étapes à partir de l'étape 51.

Si en revanche la fermeture de la vanne ne s'opère pas selon le profil commandé, le test 61 commande le passage à l'étape 62 selon laquelle il est effectué la commande, par le dispositif de commande redondant 230, de la fermeture de la vanne par déplacement du barreau redondant 210 selon un profil commandé, avant l'étape finale 63.

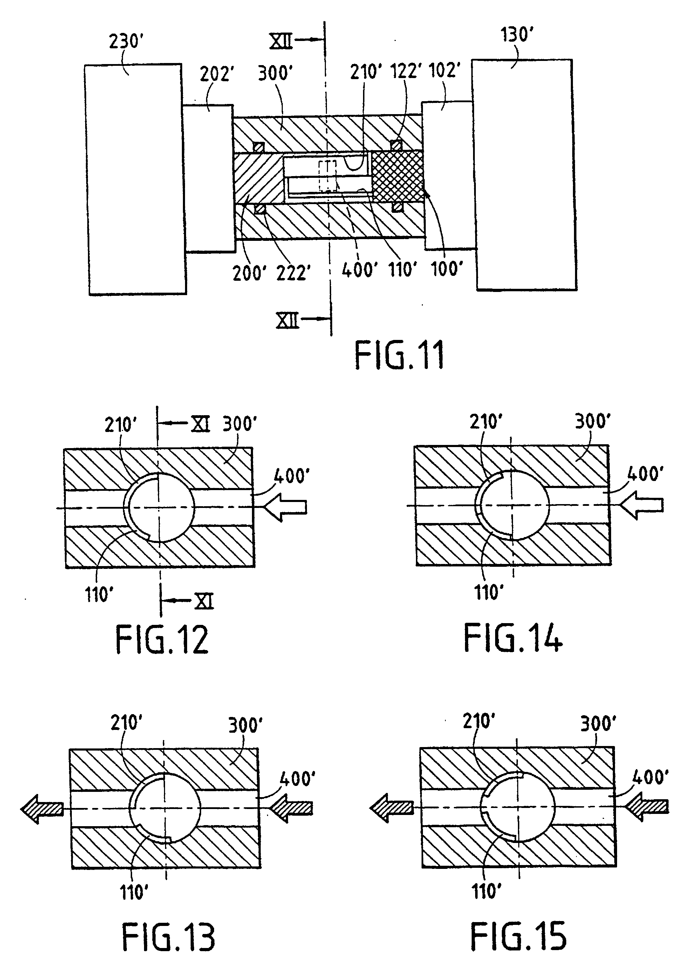

Les figures 11 à 16 concernent un autre mode de réalisation de l'invention dans lequel l'ensemble principal d'obturation 100' et l'ensemble redondant d'obturation 200', bien que disposés en alignement axial, comme selon les figures 1 à 4 et 7 à 10, comprennent respectivement un élément principal de laminage 110' et un élément redondant de laminage 210' qui ne sont pas mobiles en translation mais sont mobiles en rotation autour de leur axe d'une manière telle qu'ils permettent d'assurer l'ouverture ou 'la fermeture de la vanne de façon redondée selon un processus semblable à celui qui a déjà été décrit en référence aux modes de réalisation précédents.

Dans le mode de réalisation des figures 11 à 16, les éléments semblables à ceux du mode de réalisation des figures 1 à 4 et 10 portent les mêmes références affectées du signe prime. De la sorte, il ne sera pas décrit à nouveau en détail chacun des éléments constitutifs de la vanne redondée à éléments de laminage rotatifs.

Sur la figure 11, on a représenté de façon symbolique les dispositifs de commande principal 130' et redondant 230', le dispositif 102' comprenant les butées d'ouverture et de fermeture de la vanne par l'ensemble principal d'obturation 100', le dispositif 202' comprenant au moins une butée d'ouverture de la vanne par l'ensemble redondant d'obturation 200', des joints 122', 222' et les éléments de laminage principal 110' et redondant 210' d'obturation du canal 400' d'écoulement de fluide ménagé dans le corps de vanne 300'.

Comme on peut le voir d'après les figures 11 et 12, les éléments de laminage principal 110' et redondant 210' sont constitués par des plaques incurvées en forme de portion de cylindre qui sont solidaires des barreaux rotatifs alignés des ensembles d'obturation principal 100' et redondant 200'.

Dans la position de fermeture normale des figures 11 et 12, le canal 400' est totalement obturé par les éléments de laminage principal 110' et redondant 210' placés en position de fermeture, dans laquelle chacun de ces éléments 110', 210' obture la moitié du canal hydraulique 400'.

L'élément de laminage redondant 210' s'étend sur un secteur angulaire plus important que l'élément de laminage principal 110'. En effet, lors de l'ouverture normale de la vanne, l'élément principal de laminage 110' est seul rétracté jusqu'à atteindre la position d'ouverture maximale représentée sur la figure 13, de sorte que cet élément principal 110' n'est actif que sur la moitié du passage du canal 400'. En revanche, en cas de panne de l'élément principal de laminage 110' ou de son dispositif de commande 130', l'élément redondant de laminage 210' doit pouvoir être déplacé soit par rotation dans le sens d'un escamotage par rapport au canal 400' (figure 15) pour assurer l'ouverture de la vanne, soit dans le sens d'une occultation totale du canal 400' (figure 14) en rejoignant l'élément principal de laminage resté bloqué en position d'ouverture. L'élément redondant 210' doit ainsi pouvoir couvrir un secteur angulaire correspondant à l'intégralité de la section de passage du canal 400'.

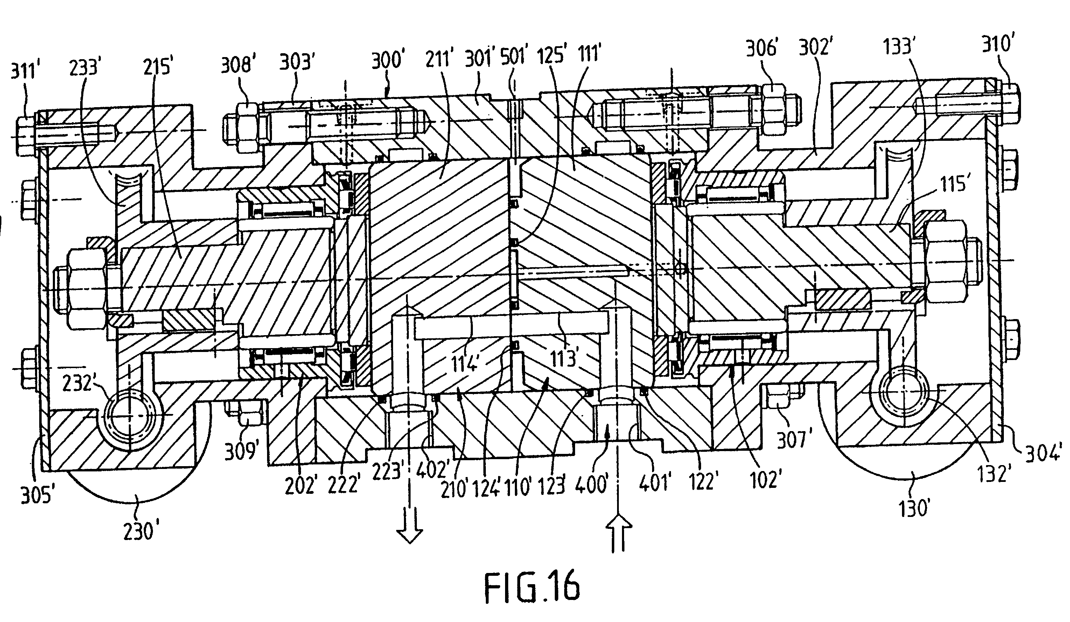

La figure 16 montre un exemple particulier de réalisation d'une vanne entièrement redondée à éléments d'obturation rotatifs.

Le corps de la vanne comprend des éléments 301' et 305' réunis entre eux par des moyens de liaison 306' à 311'. Le canal 400' d'écoulement du fluide comprend une entrée 401', une sortie 402' et des conduits 113', 114' formés dans les portions principales de tête 111', 211' des éléments de laminage principal 110' et redondant 210'. Les conduits 113', 114' ne sont mis en communication partielle ou totale que de façon sélective en fonction des positions relatives en rotation des éléments de laminage 110' et 210', selon un processus analogue à ce qui a été décrit en référence aux figures 11 à 15. La figure 16 représente une position d'ouverture de la vanne. Dans une position de fermeture normale, les dispositifs de commande 130' et 230' agissent sur les parties arrières 115', 215' des barreaux rotatifs principal et redondant 100', 200' de telle manière que les éléments de laminage 110', 210' obturent chacun la moitié de la section du passage 400' au niveau des conduits 113', 114'.

Les dispositifs de commande principal et redondant 130', 230' comprennent de préférence chacun un moteur électrique capable de transmettre par un ensemble vis 132', 232'-écrou 133', 233' ou analogue, un mouvement de déplacement avec freinage ou maintien assuré des éléments rotatifs dans la position affectée par le dispositif de commande concerné.

Les références 122' à 125' et 223', 224' représentent divers joints d'étanchéité associés à l'ensemble principal d'obturation 100' et à l'ensemble redondant d'obturation 200'.

La référence 501' désigne un capteur de position angulaire de l'ensemble principal d'obturation 100'. Ce capteur 501' peut naturellement être placé à différents emplacements.

Les références 102' et 202' désignent des ensembles formant butée et amortissement des chocs lors de déplacements en rotation des ensembles d'obturation principal 100' et redondant 200'.

## Revendications

1. Vanne de régulation redondée , pour contrôler le passage d'un fluide, comprenant un corps de vanne (300, 300') définissant un passage (400, 400') pour l'écoulement du fluide, un élément principal de laminage (110, 110') mobile à l'aide d'un dispositif de commande principal (130, 130') pour obturer sélectivement ledit passage (400, 400'), ainsi qu'un élément redondant de laminage (210, 210') mobile à l'aide d'un dispositif de commande redondant (230, 230'), **caractérisée en ce que**, en position fermée de la vanne, en fonctionnement normal, l'élément principal (110, 110') et l'élément redondant (210, 210') sont en contact l'un avec l'autre et, à eux deux, obturent complétement ledit passage, **en ce que** dans cette position fermée normale l'élément principal (110, 110') est au voisinage de sa position de déplacement maximale dans le sens de la fermeture et n'obture qu'environ la moitié du passage (400 ; 400') tandis que l'élément redondant (210, 210') est dans une position de déplacement moyenne et **en ce que** la course de l'élément redondant (210, 210') est telle que cet élément redondant (210, 210') peut être commandé pour assurer l'obturation du passage (400, 400') même lorsque l'élément principal (110, 110') est en position d'ouverture maximale.

2. Vanne selon la revendication 1, **caractérisée en ce que** l'élément principal de laminage (110 ; 110') ou le dispositif de commande principal (130 ; 130') est associé à un dispositif de butée (102 ; 102') agissant en position d'ouverture maximale et en position de fermeture normale de la vanne, et **en ce que** l'élément redondant de laminage (210 ; 210') ou le dispositif de commande redondant (230, 230') est associé à un dispositif de butée (202 ; 202') agissant en position d'ouverture maximale de l'élément principal de laminage (110 ; 110') et en position de fermeture de secours par l'élément redondant de laminage (210 ; 210').

3. Vanne selon la revendication 1 ou la revendication 2, **caractérisée en ce qu'**elle comprend des moyens d'étanchéité (121 à 124, 222, 223 ; 1122 à 1124, 1222 ; 122' à 125', 222',223') disposés au voisinage de l'élément principal de laminage (110 ; 110') et de l'élément redondant de laminage (210 ; 210').

4. Vanne selon l'une quelconque des revendications 1 à 3, **caractérisée en ce que** le dispositif de commande principal (130) comprend un moteur électrique (131 ; 1131) et un ensemble vis-écrou (132, 133 ; 1132, 1133) entraînant l'élément principal de laminage (110).

5. Vanne selon l'une quelconque des revendications 1 à 4, **caractérisée en ce que** le dispositif de commande redondant (230) comprend un moteur électrique (231 ; 1231) et un ensemble vis-écrou (232, 233 ; 1232, 1233) entraînant l'élément redondant de laminage (210).

6. Vanne selon l'une quelconque des revendications 1 à 3, **caractérisée en ce que** le dispositif de commande principal (130, 130') est associé à une boucle de régulation comportant
a) des moyens (51) pour provoquer l'ouverture de l'élément principal (110) selon un premier profil commandé jusqu'à une ouverture nominale,
b) des moyens (55) pour, lorsque cette ouverture nominale est atteinte, asservir la position de l'élément principal (110) à un paramètre prédéfini associé à un organe alimenté par l'écoulement de fluide traversant la vanne,
c) des moyens (59) pour provoquer la fermeture de l'élément principal (110, 110') selon un deuxième profil commandé qui assure un freinage en fin de course de l'élément principal (110, 110') arrivant en butée contre l'élément redondant (210, 210').

7. Vanne selon la revendication 6, **caractérisée en ce que** la boucle de régulation associée au dispositif de commande principal (130, 130') et au dispositif de commande redondant (230, 230') comprend en outre :
d) des moyens (52, 53) pour détecter un non respect de l'ouverture de l'élément principal (110, 110') selon ledit premier profil commandé,
e) des moyens (54) pour commander le déplacement de l'élément redondant (210, 210') en cas de non respect dudit premier profil commandé lors de l'ouverture de l'élément principal (110, 110'),
f) des moyens (56, 57) pour détecter un non respect de l'asservissement de l'élément principal (110, 110') audit paramètre prédéfini,
g) des moyens (58) pour asservir le déplacement de l'élément redondant (210, 210') en cas de non respect dudit asservissement de l'élément principal (110, 110'),
h) des moyens (59, 61) pour détecter un non respect de la fermeture de l'élément principal (110, 110') selon ledit deuxième profil commandé et
i) des moyens (62) pour provoquer le déplacement de l'élément redondant (210, 210') en cas de non respect dudit deuxième profil commandé lors de la fermeture de l'élément principal (110, 110').

8. Vanne selon l'une quelconque des revendications 1 à 7, **caractérisée en ce que** l'élément principal de laminage et l'élément redondant de laminage sont constitués respectivement par un barreau principal de laminage (110) et par un barreau redondant de laminage (210) alignés axialement et axialement mobiles en translation respectivement à l'aide du dispositif de commande principal (130) et à l'aide du dispositif de commande redondant (230).

9. Vanne selon la revendication 8, **caractérisée en ce que** le barreau principal (110) et le barreau redondant (210) alignés axialement sont en contact, en position de fermeture normale, par des surfaces frontales planes annulaires (1116, 1217 ; 1118, 1219).

10. Vanne selon la revendication 8, **caractérisée en ce que** le barreau principal (110) et le barreau redondant (210) alignés axialement sont en contact, en position de fermeture normale, par des surfaces de révolution coniques ou ogivales (1117, 1218).

11. Vanne selon la revendication 8, **caractérisé en ce que** le barreau principal (110) et le barreau redondant (210) sont coaxiaux et partiellement emboîtés l'un dans l'autre.

12. Vanne selon la revendication 11, **caractérisée en ce que** le barreau principal (110) comporte des canaux internes (113) assurant le passage de l'écoulement et débouchant radialement par des ouvertures à travers la paroi cylindrique de ce barreau principal (110), **en ce que** des joints (123, 124) sont interposés entre les surfaces cylindriques coaxiale du barreau principal (110) et du barreau redondant (210) et **en ce qu'** au moins l'une des ouvertures radiales du barreau principal (110) est sélectivement obturable par la paroi cylindrique du barreau redondant (210) dans lequel le barreau principal (110) est emboîté.

13. Vanne selon l'une quelconque des revendications 1 à 8, caractérisée en que l'élément principal de laminage et l'élément redondant de laminage sont constitués respectivement par un barreau principal de laminage (110') et par un barreau redondant de laminage (210') alignés axialement et munis de volets de laminage mobiles en rotation respectivement à l'aide du dispositif de commande principal (130') et à l'aide du dispositif de commande redondant (230').

14. Vanne selon l'une quelconque des revendications 1 à 13, **caractérisée en ce qu'**elle comprend des dispositifs d'amortissement de choc (1103, 1203) disposés au niveau des interfaces d'une part entre le dispositif de commande principal (130) et l'élément principal de laminage (110) et d'autre part entre le dispositif de commande redondant (230) et l'élément redondant de laminage (210).

15. Vanne selon l'une quelconque des revendications 1 à 14, **caractérisée en ce qu'**elle est appliquée à la commande de l'alimentation en ergol d'un générateur de gaz destiné à assurer l'entraînement de turbopompes d'alimentation en ergols d'un moteur-fusée.

16. Vanne selon la revendication 7 et la revendication 15, **caractérisée en ce que** ledit paramètre prédéfini est constitué par la puissance du générateur de gaz.

## Patentansprüche

1. Redundantes Regelventil, um das Durchströmen eines Fluids zu regeln, aufweisend einen Ventilhauptteil (300, 300'), welcher eine Passage (400, 400') für das Abfließen eines Fluids definiert, ein Hauptschieberelement (110, 110'), welches mit Hilfe einer Hauptsteuereinrichtung (130, 130') bewegbar ist, um die Passage (400, 400') wahlweise zu verschließen, und ein redundantes Schieberelement (210, 210'), welches mit Hilfe einer redundanten Steuereinrichtung (130, 130') bewegbar ist,
**dadurch gekennzeichnet, daß** bei geschlossener Stellung des Ventils, bei normalem Betrieb, das Hauptelement (110, 110') und das redundante Element (210, 210') miteinander in Kontakt sind und beide zusammen die Passage vollständig verschließen, und daß bei dieser normalen geschlossenen Stellung das Hauptelement (110, 110') in der Nähe seiner Position maximaler Verlagerung in Richtung des Verschließens ist und nur etwa die Hälfte der Passage (400, 400') verschließt, während das redundante Element (210, 210') in einer Position mittlerer Verlagerung ist, und daß der Weg des redundanten Elementes (210, 210') so ist, daß dieses redundante Element (210, 210') gesteuert werden kann, um das Verschließen der Passage (400, 400') zu gewährleisten, auch wenn das Hauptelement (110, 110') in maximal geöffneter Stellung ist.

2. Ventil gemäß Anspruch 1, **dadurch gekennzeichnet, daß** das Hauptschieberelement (110, 110') oder die Hauptsteuereinrichtung (130, 130') mit einer Anschlageinrichtung (102, 102') verbunden ist, welche in der Position der maximalen Öffnung und in der normalen Schließposition des Ventils wirkt, und daß das redundante Schieberelement (210, 210') oder die redundante Steuereinrichtung (230, 230') mit einer Anschlageinrichtung (202, 202') verbunden ist, welche in der Position der maximalen Öffnung des Hauptschieberelements (110, 110') und in der Sicherungsschließposition des redundanten Schieberelements (210, 210') wirkt.

3. Ventil gemäß Anspruch 1 oder 2 , **dadurch gekennzeichnet, daß** es Dichtungseinrichtungen (121 bis 124, 222, 223; 1122 bis 1124, 1222; 122' bis 125', 222', 223') aufweist, welche in der Nähe des Hauptschieberelements (110, 110') und des redundanten Schieberelements (210, 210') angeordnet sind.

4. Ventil gemäß einer der Ansprüche 1 bis 3, **dadurch gekennzeichnet, daß** die Hauptsteuereinrichtung (130) einen Elektromotor (131;1131) und eine Schraube-Mutter-Anordnung (132, 133, 1132, 1133) aufweist, welche das Hauptschieberelement (110) antreiben.

5. Ventil gemäß einer der Ansprüche 1 bis 4, **dadurch gekennzeichnet, daß** die redundante Steuereinrichtung (230) einen Elektromotor (231;1231) und eine Schraube-Mutter-Anordnung (232, 233, 1232 1233) aufweist, welche das redundante Schieberelement (210) antreiben.

6. Ventil gemäß einem der Ansprüche 1 bis 3, **dadurch gekennzeichnet, daß** die Hauptsteuereinrichtung (130, 130') mit einen Regelkreis verbunden ist, aufweisend
a) Mittel (51) zur Auslösung des Öffnens des Hauptelements (110) bis zur nominalen Öffnung gemäß einem vorgegebenen ersten Profil,
b) Mittel (55) zum Regeln der Position, wenn die nominale Öffnung des Hauptelements (110) erreicht ist, gemäß einem vorher definierten Parameter, der verknüpft ist mit einer Einrichtung, die durch das Strömen des Fluids durch das Ventil angetrieben ist,
c) Mittel (59) zur Auslösung des Schließens des Hauptelements (110, 110') gemäß einem vorgegebenen zweiten Profil, welches ein Abbremsen am Ende der Strecke des Hauptelements (110, 110') gewährleistet, wobei es zum Anschlag gegen das redundante Element (210, 210') ankommt.

7. Ventil gemäß Anspruch 6, **dadurch gekennzeichnet, daß** der mit der Hauptsteuereinrichtung (130, 130') und der redundanten Steuereinrichtung (230, 230') verbundene Regelkreis ferner aufweist:
d) Mittel (52, 53) zum Erfassen einer Abweichung der Öffnung des Hauptelements (110, 110') gemäß dem ersten vorgegebenen Profil,
e) Mittel (54) zum Steuern der Verlagerung des redundanten Elements, im Fall der Abweichung vom ersten vorgegebenen Profil während des Öffnens des Hauptelements (110, 110'),
f) Mittel zum Erfassen einer Abweichung der Regelung des Hauptelements (110, 110') gemäß dem vorgegebenen Parameter,
g) Mittel (58) zum Regeln der Verlagerung des redundanten Elements (210, 210') im Fall einer Abweichung der Regelung des Hauptelements (110, 110'),
h) Mittel (59, 61) zum Erfassen einer Abweichung des Schließens des Hauptelements (110, 110') gemäß dem zweiten vorgegebenen Profil, und
i) Mittel (62) zur Auslösung des Verlagerns des redundanten Elements (210, 210') im Fall einer Abweichung vom zweiten vorgegebenen Profil während des Schließens des Hauptelements (110, 110').

8. Ventil gemäß einem der Ansprüche 1 bis 7, **dadurch gekennzeichnet, daß** das Hauptschieberelement und das redundante Schieberelement aus einer Hauptschieberstange (110) bzw. einer redundanten Schieberstange (220) gebildet sind, die axial ausgerichtet sind und in axialer Richtung beweglich sind mit Hilfe der Hauptsteuereinrichtung (130) bzw. der redundanten Steuereinrichtung (230).

9. Ventil gemäß Anspruch 8, **dadurch gekennzeichnet, daß** Hauptstange (110) und die redundante Stange (210), die axial ausgerichtet sind, bei normaler Schließposition durch vordere, plane, ringförmige Flächen (1116, 1217, 1118, 1219) in Kontakt sind.

10. Ventil gemäß Anspruch 8, **dadurch gekennzeichnet, daß** die Hauptstange (110) und die redundante Stange (210), die axial ausgerichtet sind, bei normaler Schließposition durch konische oder bogenförmige Drehflächen (1117, 1218) in Kontakt sind.

11. Ventil gemäß Anspruch 8, **dadurch gekennzeichnet, daß** die Hauptstange (110) und redundante Stange (210) koaxial und teilweise ineinander gefügt sind.

12. Ventil gemäß Anspruch 11, **dadurch gekennzeichnet, daß** die Hauptstange (110) interne Kanäle (113) aufweist, die die Durchströmung der Hauptstange (110) gewährleisten und radial in Öffnungen in der zylindrischen Wand dieser Hauptstange münden, daß sich Dichtungen (123, 124) zwischen den koaxialen zylindrischen Flächen der Hauptstange (110) und der redundanten Stange (210) befinden und daß mindestens eine der radialen Öffnungen der Hauptstange (110) selektiv verschließbar ist durch die zylindrische Wand der redundanten Stange (210), in welcher die Hauptstange (110) eingefügt ist.

13. Ventil gemäß einem der Ansprüche 1 bis 8, **dadurch gekennzeichnet, daß** das Hauptschieberelement und das redundante Schieberelement aus einer Hauptschieberstange (110') bzw. einer redundanten Schieberstange (220') gebildet wird, die axial ausgerichtet sind und mit Schließschiebern ausgestattet sind, die mit Hilfe der Hauptsteuereinrichtung (130'), respektive der redundanten Steuereinrichtung (230') drehend bewegbar sind.

14. Ventil gemäß einem der Ansprüche 1 bis 13, **dadurch gekennzeichnet, daß** es Einrichtungen zur Stoßdämpfung (1103, 1203) aufweist, welche an den Grenzflächen zum einen der Hauptsteuereinrichtung (130) und dem Hauptschieberelement (110) und zum anderen der redundanten Steuereinrichtung (230) und dem redundanten Schieberelement (210) angeordnet sind.

15. Ventil gemäß einem der Ansprüche 1 bis 14, **dadurch gekennzeichnet, daß** es verwendet wird zur Steuerung der Treibstoffversorgung eines Gasgenerators, der zur Gewährleistung des Antriebs von Turbopumpen zur Treibstoffversorgung eines Raketentriebwerks bestimmt ist.

16. Ventil gemäß Anspruch 7 und Anspruch 15, **dadurch gekennzeichnet, daß** der vorgebene Parameter aus der Leistung des Gasgenerators besteht.

## Claims

1. A redundant regulation valve for controlling fluid flow, the valve comprising a valve body (300, 300') defining a fluid flow passage (400, 400'), a main throttle element (110, 110') that is movable by means of a main control device (130, 130') to selectively obstruct said passage (400, 400'), as well as a redundant throttle element (210, 210') movable by means of a redundant control device (230, 230'), the valve being **characterised in that**, in the closed position thereof, in normal operation, the main element (110, 110') and the redundant element (210, 210') are in contact with each other and the two of them obstruct the passage completely, **in that** in said normal closed position, the main element (110, 110') is in the vicinity of its position of maximum displacement in the closure direction and obstructs only about half of the passage (400; 400'), while the redundant element (210, 210') is in a medium displacement position, and **in that** the stroke of the redundant element (210, 210') is such that the redundant element (210, 210') can be controlled to obstruct the passage (400, 401') even when the main element (110, 110') is in its fully-open position.

2. A valve according to claim 1, **characterised in that** the main throttle element (110; 110') or the main control device (130; 130') is associated with an abutment device (102; 102') that acts in the fully-open position and in the normally closed position of the valve, and **in that** the redundant throttle element (210; 210') or the redundant control device (230, 230') is associated with an abutment device (202; 202') that acts in the fully-open position of the main throttle element (110; 110') and in the emergency closure position of the redundant throttle element (210; 210').

3. A valve according to claim 1 or claim 2, **characterised in that** it includes sealing means (121 to 124, 222, 223; 1122 to 1124, 1222; 122' to 125', 222', 223') disposed in the vicinity of the main throttle element (110; 110') and the redundant throttle element (210; 210').

4. A valve according to any one of claims 1 to 3, **characterised in that** the main control device (130) comprises an electric motor (131; 1131) and a screw-and-nut assembly (132, 133; 1132, 1133) driving the main throttle element (110).

5. A valve according to any one of claims 1 to 4, **characterised in that** the redundant control device (230) comprises an electric motor (231; 1231) and a screw-and-nut assembly (232, 233; 1232, 1233) driving the redundant throttle element (210).

6. A valve according to any one of claims 1 to 3, **characterised in that** the main control device (130, 130') is associated with a regulation loop, comprising:
a) means (51) for causing the main element (110) to open in compliance with a controlled relationship until it reaches its nominal open position;
b) means (55) for acting when said nominal open position is reached, to servo-control the position of the main element (110) to a predefined parameter associated with a member fed by the flow of fluid through the valve; and
c) means (59) for causing the main element (110, 110') to close in compliance with a second controlled relationship and which ensures end-of-stroke braking of the main element (110, 110') coming into abutment against the redundant element (210, 210').

7. A valve according to claim 6, **characterised in that** the regulation loop associated with the main control device (130, 130') and with the redundant control device (230, 230') further comprises:
d) means (52, 53) for detecting that opening of the main element (110, 110') is not in compliance with said first controlled relationship;
e) means (54) for controlling displacement of the redundant element (210, 210') in the event of non-compliance with said first controlled relationship during opening of the main element (110, 110');
f) means (56, 57) for detecting non-compliance of the servo-control of the main element (110, 110') with said predefined parameter;
g) means (58) for servo-controlling displacement of the redundant element (210, 210') in the event of non-compliance of said servo-control of the main element (110, 110').
h) means (59, 61) for detecting non-compliance of the closure of the main element (110, 110') with said second controlled relationship; and
i) means (62) for causing the displacement of the redundant element (210, 210') in the event of non-compliance with said second controlled relationship during closure of the main element (110, 110').

8. A valve according to any one of claims 1 to 7, **characterised in that** the main throttle element and the redundant throttle element are respectively constituted by a main throttle bar (110) and by a redundant throttle bar (210) in axial alignment and axially movable in translation respectively by means of the main control device (130) and by means of the redundant control device (230).

9. A valve according to claim 8, **characterised in that** the axially-aligned main bar (110) and redundant bar (210) are in contact in the normal closed position via annular plane front surfaces (1116, 1217; 1118, 1219).

10. A valve according to claim 8, **characterised in that** the axially-aligned main bar (110) and redundant bar (210) are in contact in the normal closed position via conical or bullet-shaped circularly symmetrical surfaces (1117, 1218).

11. A valve according to claim 8, **characterised in that** the main bar (110) and the redundant bar (210) are coaxial and partially engaged one in the other.

12. A valve according to claim 11, **characterised in that** the main bar (110) has internal channels (113) allowing the flow to pass through and opening out radially via openings passing through the cylindrical wall of said main bar (110), **in that** gaskets (123, 124) are interposed between the coaxial cylindrical surfaces of the main bar (110) and of the redundant bar (210), and **in that** at least one of the radial openings of the main bar (110) is selectively obstructable by the cylindrical wall of the redundant bar (210) in which the main bar (110) is engaged.

13. A valve according to any one of claims 1 to 8, **characterised in that** the main throttle element and the redundant throttle element are respectively constituted by a main throttle bar (110') and by a redundant throttle bar (210') which are in axial alignment and which are provided with throttle flaps movable in rotation respectively by means of the main control device (130') and by means of the redundant control device (230').

14. A valve according to any one of clams 1 to 13, **characterised in that** it includes shock absorber devices (1103, 1203) disposed at the interfaces between the main control device (130) and the main throttle element (110), and between the redundant control device (230) and the redundant throttle element (210).

15. A valve according to any one of claims 1 to 14, **characterised in that** it is applied to controlling the feed of propellant to a gas generator designed to drive turbopumps for feeding propellants to a rocket engine.

16. A valve according to claim 7 and claim 15, **characterised in that** said predefined parameter is constituted by the power of the gas generator.
